# EUROPÄISCHE PATENTSCHRIFT

(11) **EP 3 494 551 B1**
(45) Veröffentlichungstag und Bekanntmachung des Hinweises auf die Patenterteilung: **15.09.2021**
(21) Anmeldenummer: 18700556.6
(22) Anmeldetag: 11.01.2018
(51) Int. Cl.: G07B 1/00, G07B 15/00, G07F 17/24, G07F 17/42

(54) **KARTENAUTOMAT MIT SICHERHEITSBENUTZEROBERFLÄCHE**
CARD MACHINE WITH A SECURITY USER INTERFACE
DISTRIBUTEUR DE CARTES AVEC INTERFACE UTILISATEUR DE SÉCURITÉ

(30) Priorität: 30.01.2017 DE 102017101732
(43) Veröffentlichungstag der Anmeldung: 12.06.2019
(73) Patentinhaber: Wanzl GmbH & Co. KGaA, 89340 Leipheim (DE)
(72) Erfinder: PAUL, Jürgen, 87739 Loppenhausen (DE); GASCHE, Thomas, 89340 Leipheim (DE); LUTZENBERGER, Thomas, 87739 Loppenhausen (DE)
(86) Internationale Anmeldenummer: PCT/EP2018/050658
(87) Internationale Veröffentlichungsnummer: WO 2018/137933

(56) Entgegenhaltungen:
- WO-A1-2004/055748
- WO-A1-2009/127712
- US-A1- 2004 226 993
- US-A1- 2010 066 491
- US-A1- 2011 032 205
- US-A1- 2016 343 204
- Skidata: "Power.Cash / Power.Cash "Touch"", , 5. Juni 2016 (2016-06-05), Seiten 1-2, XP055462407, Gefunden im Internet: URL:https://web.archive.org/web/2016060506 5224/http://members.skidata.com/index.php? eID=getContainer&apikey=d2b5e4b962a29d332a 56161034e81247&file=274 [gefunden am 2018-03-23]

## Beschreibung

Die Erfindung liegt auf dem Gebiet der Automatentechnik, der Elektronik und der Netzwerktechnologie und betrifft insbesondere einen Automaten, der mitunter im Rahmen von Zugangssystemen, Kassenautomaten-, Ticketautomaten-Systemen eingesetzt werden kann.

Derartige Automaten umfassen eine Benutzerschnittstelle, die dazu dient, dass der Automat Instruktionen des Anwenders, Daten oder Geld zur weiteren Verarbeitung erfassen kann. Letzteres kann beispielsweise durch Eingabe von Münzen, Banknoten, von Kreditkarten oder sonstigen Karten geschehen. Ebenso können digitale Daten, wie z.B. PIN-Daten zur Kartenbedienung oder weitere Daten, wie Authentifizierungsdaten, erfasset werden.

Die erfassten Geldbeträge oder Daten werden dann im Automaten einer automatischen und elektronischen Verarbeitung zugeführt, die je nach Einsatzgebiet des Automaten, eine Aktion auslöst, wie z.B. einen Zugang unmittelbar freigibt oder mittelbar eine Zugangsberechtigung ausgibt (z.B. in Form einer Karte oder eines Wert-Bons). Im Fall einer Überzahlung kann auch Wechselgeld ausgegeben werden.

Die Automaten umfassen eine Vielzahl von notwendigen Baueinheiten, um die erforderliche Funktion bereitstellen zu können sowie eine Benutzeroberfläche, die zur Interaktion mit dem Anwender bestimmt ist. Die Baueinheiten sind in einen Automatenkorpus integriert, der quasi als Gehäuse dient. Des Weiteren umfasst der Automat - je nach Anwendungs- und Einsatzgebiet - unterschiedliche elektronische Baueinheiten, wie einen Banknotenakzeptor mit Zählfunktion, einen RFID-Lesegerät für das Auslesen von Daten, die auf einer RFID-Karte gespeichert sind und/oder einen Drucker zum Bedrucken von Karten oder Papierbons.

So zeigt die EP 0 935 219 B1 ein Beispiel eines Automaten, der als Parkautomat ausgelegt ist und zur Ausgabe und Rücknahme von Parkberechtigungsausweisen dient. Dazu werden parkbezogene Daten (wie Parkdauer, Parkgebühr) von dem Automaten auf den Berechtigungsausweis geschrieben. Auch eine Möglichkeit zur Kostenbefreiung kann vorgesehen sein.

Neben der oben geschilderten Anwendung für Parkautomaten können andere Einsatzgebiete eines Automaten die Zugangskontrolle, den Banktransfer oder die Ausgabe von Tickets oder weitere Anwendungen betreffen.

Die WO 2009/127712 A1 offenbart einen Verkaufsautomaten mit einem Türelement, welches Sicherheitsglas und mehrere Betriebsmodule aufweist.

Bisher wurden die Automaten für ihren geplanten Einsatzzweck hin geplant, bestückt und montiert und dann an den Kunden ausgeliefert. Nach Auslieferung konnte der Automat bislang nicht mehr ohne aufwändige Umbaumaßnahmen hinsichtlich seiner Funktionalität und den jeweiligen Sicherheitsanforderungen geändert werden. Wünschenswert ist es, dass der Automat hinsichtlich seiner Funktionalität auch noch nach Auslieferung und sogar während des Betriebs verändert angesteuert werden kann und somit flexibel an die aktuellen Anforderungen anpassbar ist.

Ein weiterer wichtiger Aspekt betrifft die Sicherheit des Automaten. Während des Betriebs befindet sich in der Regel ein Geldbetrag im Automaten. Von daher ist es von enormer Wichtigkeit, die Automaten vor unberechtigten Zugriffen und nichtautorisierten Automatenöffnungen zu schützen und sicher zu gestalten.

Im Stand der Technik zeigt die DE 10 2010 001 570 A1 einen Automaten mit einer Kamera, um Aufnahmen von dem Anwender zu tätigen, der den Automaten bedient. Die von der Kamera erfassten Bilder werden dann mit Referenzbildern, die in einer Datenbank abgelegt sind, auf Übereinstimmung verglichen, um eine Autorisierung des Anwenders auszuführen und um gegebenenfalls weitere Funktionen des Automaten zu aktivieren oder zu deaktivieren.

Ausgehend vom bekannten Stand der Technik hat sich die vorliegende Erfindung zur Aufgabe gestellt, einen Automaten zu schaffen, der einbruchsicher ist und ein Verfahren zum Betreiben eines Automaten und ein Automatensystem bereitzustellen, das hinsichtlich der Speicherung von sensiblen Daten (z.B. von persönlichen Daten des Anwenders) sicher und hinsichtlich der Herstellung flexibel ist und damit kostengünstiger hergestellt und betrieben werden kann.

Diese Aufgabe wird durch den jeweiligen Gegenstand der beiliegenden Patentansprüche gelöst, insbesondere durch einen Automaten nach Anspruch 1, ein Türelement für einen Automaten gemäß Anspruch 10 und ein Automatensystem nach Anspruch 11. Vorteilhafte Ausführungsformen sind Gegenstand der abhängigen Ansprüche 2-9, der Beschreibung und der Zeichnungen.

Gemäß einem ersten Aspekt der Erfindung, wird die Aufgabe gelöst durch einen Automaten, insbesondere einen Kartenautomaten, umfassend:
- Ein Türelement und
- einen Korpus, wobei das Türelement den Korpus während eines operativen Betriebs des Automaten verschließt, so dass sich der Automat in einem abgesichert geschlossenen Zustand befindet.

In dem Türelement sind mehrere integrierte Betriebsmodule ausgebildet, wobei die Betriebsmodule
o mehrere Bildschirmelemente zur Ein- und Ausgabe von Daten, beispielsweise in Form einer (graphischen) Benutzeroberfläche, und
o mehrere Ein-und Ausgabeeinheiten zur Ein- und Ausgabe von Werteinheiten in Form von physikalischen Objekten umfassen, wie beispielsweise zur Ein- und Ausgabe von Geld, Münze, Karten, Chips umfassen und wobei zumindest eine Ein- und Ausgabeeinheit als Kartenausgabeeinheit bestimmt ist.

Eine Vorderfront des Türelementes ist dabei vollständig als eine durchgehende Glasscheibe ausgebildet, in die die Betriebsmodule oberflächenbündig und während des Betriebs des Automaten (also nach Montage und Auslieferung des Automaten) spaltfrei integriert sind, wobei die Bildschirmelemente als berührungssensitiver Bildschirm bzw. Tastschirm ausgebildet sind. Für die Bildschirmelemente wird vorzugsweise eine kapazitive Sensortechnik verwendet. Ein Touchscreen mit einer Sensortechnik ist beispielsweise in der GB 2 348 039 B näher beschrieben. Bei kapazitiven Bildschirmen kann eine zusätzliche Piezoelementschicht mit Piezoelementen verwendet werden, um taktiles Feedback zu detektieren.

Für die als Touchscreen ausgebildeten Bildschirmelemente wird in einer bevorzugten Ausführungsform der Erfindung eine kapazitive Touchscreen-Technologie mit Multi-Sensor-Funktionalität verwendet, bei der auch gleichzeitige Berührungen detektiert werden können. Üblicherweise umfasst der Touchscreen einen Touchscreensensor als eigentliche Ein- und Ausgabeeinheit, einen Controller, der in oder am Touchscreensensor angeordnet sein kann und fakultativ einen Treiber, der in dem Betriebsmodul angeordnet sein kann. In einer alternativen und ebenfalls bevorzugten Ausführungsform der Erfindung kann der Touchscreensensor als projiziertkapazitiver Sensor ausgebildet sein (meistens "PCT" = "Projected Capacitive Touch" oder "PCAP" genannt). Dabei nutzt der Sensor zwei Ebenen mit einem leitfähigen Muster (beispielsweise Streifen oder Rauten). Die Ebenen sind voneinander isoliert angebracht. Befindet sich ein Finger am Kreuzungspunkt zweier Streifen, so ändert sich die Kapazität des Kondensators, und es kommt ein größeres Signal am Empfängerstreifen an. Diese Signaländerung lässt sich somit genau anhand der X- und Y-Koordinaten messen, wobei auch mehrere Berührungspunkte exakt definierbar sind. Der Stromfluss von den Ecken des Touchscreens zum Berührungspunkt ist proportional zu den XY-Koordinaten. Der wesentliche Vorteil dieses Systems ist, dass der Sensor auf der Rückseite des Deckglases angebracht werden kann, da die Berührungserkennung durch das Glas "hindurchprojiziert" wird. So erfolgt die Bedienung auf der praktisch verschleißfreien Glasoberfläche. Ferner ist die Erkennung von Gesten und mehreren Berührungen (also Multi-Touch) möglich. In anderen Ausführungsform der Erfindung können jedoch auch resistive oder induktive oder andere Sensortechnologien für Touchscreens zur Anwendung kommen. Grundsätzlich stellt der Touchscreensensor eine Benutzeroberfläche (auch Monitor oder Display genannt) dar und umfasst den Sensor zur Erfassung der Eingabesignale zur Steuerung und Bedienung des Automaten sowie ein Display, auf dem Interaktionsflächen, Schaltelemente, Kontrollfelder und/oder Eingabefelder zur Steuerung des Automaten dargestellt sein können.

Während des Betriebs des Automaten, also nach dessen Montage und Auslieferung, sind die Glasscheibe und die in diese integrierten Betriebsmodule einstückig ausgebildet. Die Betriebsmodule sind oberflächenbündig in die Glasscheibe eingelassen. Die Betriebsmodule und die Vorderfront des Automaten bilden eine durchgehende (Benutzer-) Oberfläche. Damit kann die Sicherheit des Automaten deutlich gesteigert werden.

Während der Herstellung des Automaten werden die Betriebsmodule in die Glasscheibe und insbesondere in vorgefertigte ausgestanzte Ausschnitte der Glasscheibe eingesetzt und abgedichtet/verfugt. Dies kann mit einem Gummi- oder Silicon-artigem Material erfolgen. In einer vorteilhaften Weiterbildung der Erfindung sind die Betriebsmodule somit während der Fertigung flexibel austauschbar. So kann z.B. ein Banknotenleser durch einen Kartenleser ersetzt werden und umgekehrt. Zur weiteren Vereinfachung des Montagevorganges können die Betriebsmodule eine übereinstimmende Baugröße aufweisen. Ansonsten ist die Baugröße der Betriebsmodule an die jeweils vorgesehenen Ausschnitte in der Glasscheibe angepasst. Im montierten Zustand, also in einer Zeitphase nach Abschluss der Montage und z.B. nach Auslieferung des Automaten können die Betriebsmodule hingegen nicht werkzeuglos gewechselt oder entfernt werden. Die Betriebsmodule sind insbesondere zu einer durchgehenden, monolithischen Einheit verbaut und in die Glasscheibe integriert.

Die Betriebsmodule sind vorzugsweise gemäß einer Kachelanordnung strukturiert. Die Betriebsmodule sind zum Einsatz in und zur integrativen Verbindung mit der Glasscheibe ausgebildet. Die jeweilige Funktionalität einer Kachel bzw. des integrierten Betriebsmoduls ist in einer elektronischen Schaltung codiert. In einer bevorzugten Ausführungsform der Erfindung ist als oberes Element ein sich nahezu über die gesamte Breite der Glasscheibe erstreckendes Displayelement ausgebildet. Darunter befinden sich zwei oder drei Zeilen von Kachelelementen. Die erste Zeile der Kachelelemente kann unterschiedliche Zahlungsmodalitäten umsetzen, wie ein Betriebsmodul zur Münzannahme, ein Betriebsmodul zur Eingabe von Banknoten und ein Betriebsmodul zur Eingabe von Karten. In der zweiten Reihe, darunter, können Betriebsmodule zur Ausgabe von Karten (z.B. in Kombination mit einem Kartendrucker) ausgebildet sein. Die Anordnung der Kacheln und die Anordnung der Betriebsmodule kann flexibel für den jeweiligen Anwendungsfall ausgelegt werden.

Die Vorderfront des Türelementes umfasst im montierten Zustand mehrere unterschiedliche Betriebsmodule, die teilweise als Bildschirmelemente ausgebildet sind. Alle Betriebsmodule sind derart in die Glasscheibe integriert, dass sie eine durchgehende Oberfläche bilden. Es sind keine Vorsprünge vorgesehen, die aus der Ebene der Vorderfront hervorstehen. Dies hat den wichtigen Vorteil, dass die Vorderfront des Automaten leicht gereinigt werden kann und weniger verschmutzt. Des Weiteren ist aufgrund der kachelartigen Struktur eine leichte Orientierung zur Bedienung des Automaten möglich. Die Betriebsmodule werden in der Glasscheibe unlösbar verbaut und integriert. Dazu wird die Verbindung zwischen Betriebsmodul und Glasscheibe verfugt oder abgedichtet. Dies hat den wichtigen technischen Vorteil, dass die Vorderfront des Automaten mit der Glasscheibe völlig unempfindlich gegenüber Spritz- oder Schmutzwasser ist.

Der Automat kann zum Bedrucken der Karte ausgelegt sein. In diesem Fall kann ein Datenträger (Papier, Kunststoff) mit Daten bedruckt werden. Bei den Daten kann es sich um analoge Daten (Bild, Zeichen etc.) oder um digitale Daten (z.B. als Code für eine Chip- oder Transponderkarte) handeln. Die Datenhaltung erfolgt ausschließlich auf dem Server. Eine Zuordnung zwischen Sitzungsdaten (Daten, die im Rahmen der Automatenbedienung vom Anwender eingegeben oder automatisch erfasst werden) und persönlichen Daten des Anwenders wird weder auf dem Automaten noch auf der Karte gespeichert. Somit kann bei einem möglichen Angriff auch ein korrumpierter Prozess weder von der Karte noch von dem Automaten Daten auslesen, aus denen eine Zuordnung zu persönlichen Daten des Anwenders möglich wird (also z.B. Frage wie: "wann hat welcher Anwender welchen Geldbetrag in den Automaten eingespeist?"). Solche Zuordnungsrelationen können nur auf dem Server mittels weiteren, vorkonfigurierten Sicherungsmaßnahmen erstellt werden.

Der Automat kann zur Ausgabe von Informationen ausgelegt sein. Die Informationen können als digitaler Datensatz bereitgestellt werden.

Grundsätzlich ist der Automat zur Ausgabe von Karten oder Werteinheiten (Geld, Wertkarte etc.) oder von Informationen, z.B. in Form eines (digitalen) Datensatzes, und nicht zur Ausgabe von Waren und Produkten ausgelegt. Die Ausgabe von Waren kann über nachgelagerte Systeme gesteuert und ausgeführt werden. Der Automat kann jedoch zur Ausgabe einer Autorisierung, z.B. in Form einer Karte, für ein Warenausgabesystem angewendet werden.

In einer vorteilhaften Ausführungsform der Erfindung umfasst der Automat eine Beleuchtungseinheit, die mehrere Beleuchtungssegmente aufweisen kann, wobei insbesondere eines der Beleuchtungssegmente auf der Vorderfront des Türelementes angeordnet ist und entlang einer Außenkante des Türelementes verläuft und zur Beleuchtung des gesamten Automaten dient. Dieses Gesamtbeleuchtungsmodul kann über eine elektronische Schaltung geschaltet und gesteuert werden. So kann z.B. in Abhängigkeit von einem bestimmten Betriebszustand des Automaten die Beleuchtung aktiviert werden. Dazu kann insbesondere ein Detektor vorgesehen sein, der die Anwesenheit eines Anwenders vor dem Automaten erfasst und nur bei Anwesenheit in Bedienposition das Gesamtbeleuchtungsmodul aktiviert. Des Weiteren können mehrere, einzelne Kachelbeleuchtungselemente zur Beleuchtung der einzelnen Betriebsmodule bzw. der einzelnen Kacheln der Glasscheibe vorgesehen sein. Die Kachelbeleuchtungselemente sind vorzugsweise nicht in dem einzelnen Betriebsmodul, sondern direkt auf der Glasscheibe ausgebildet in einem Bereich um den jeweiligen Ausschnitt zum Einsetzen des Betriebsmoduls. Die Kachelbeleuchtungselemente können ebenfalls über eine elektronische Schaltung geschaltet und gesteuert werden. So kann z.B. konfiguriert werden, dass immer nur diejenige Kachel beleuchtet wird, die im Betriebsablauf als nächstes bedient werden muss und/oder die aktuell gerade zu bedienende Kachel. Damit wird es möglich, den Anwender durch das Automatenbedienmenü zu führen und ihn auf die jeweils zu bedienenden Betriebsmodule hinzuweisen und diese auch optisch zu markieren durch eine entsprechende Signalausgabe. Die elektronische Schaltung kann noch während des Betriebs um-konfiguriert und geändert werden. Die Intensität, der Modus (z.B. blinkend) und/oder die Farbe der Beleuchtungssegmente auf der Vorderseite des Türelements oder entlang der Außenkante des Türelements sind frei wählbar bzw. konfigurierbar. Durch die flexible Farbauswahl kann auf verschiedene Zustände hingewiesen werden. (z.B. rot blinkend bei Störung) Diese Beleuchtungssegmente können hierbei umlaufend und/oder unterbrochen ausgeführt sein.

In einer weiteren, vorteilhaften Ausführungsform der Erfindung umfasst der Automat eine Server-Schnittstelle zu einem externen Server, wobei an den Server eine Datenbank angeschlossen sein kann. Falls mehrere Automaten in einem System betrieben werden, können diese somit einheitlich über eine entsprechende Programmierung des Servers angesteuert werden.

In einer weiteren, vorteilhaften Ausführungsform der Erfindung ist zumindest ein Betriebsmodul des Automaten als RFID-Drucker ausgebildet, um die auszugebende Karte zu bedrucken. Die Karte kann als Papierkarte oder Kunststoffkarte bedruckt werden. Die Karte kann mit Daten, beispielsweise in Form eines QR-Codes, Barcodes oder als Chipkarte, z.B. als RFID-Karte bedruckt werden. Alternativ oder kumulativ zum Bedrucken der Karte mit digitalen Daten, kann auch eine Magnetstreifenkarte oder eine Bildkarte ausgegeben werden, etwa als Kundekarte mit einem Bild des jeweiligen Nutzers.

In einer weiteren, vorteilhaften Ausführungsform der Erfindung weist das Türelement - insbesondere zumindest ein Metallrahmenelement des Türelementes - annähernd dieselbe Bauhöhe auf, wie der Korpus des Automaten. Die Glasplatte (Glasscheibe) kann auf einem Metallrahmenelement montiert sein. In einer Ausführungsform der Erfindung erstreckt sich die Glasplatte über die gesamte Höhe des Automaten und entspricht damit der Höhe des Korpus. In einer alternativen Ausführungsform der Erfindung hat die Glasplatte eine geringfügig (5 - 15%) geringere Bauhöhe als der Korpus und endet ca. 10- 25 cm über dem Boden. In diesem unteren Bereich von 10 - 25 cm ist dann eine Metallplatte vorgesehen, um Beschädigungen durch Kollisionen mit beweglichen Teilen vorzubeugen und um den Korpus vollständig durch das Türelement zu verschließen. In beiden Ausführungsform (Glasplatte hat volle Höhe oder Teilhöhe des Korpus) verschließt das Türelement den Korpus vollständig.

Das Glas der Glasscheibe ist vorzugsweise als Einfachsicherheitsglas ausgebildet. Die Glasscheibe kann mit einem Verschwindedruck behandelt sein. Der Verschwindedruck ist ein Hinterdruckverfahren mit dem sich speziell für Touchscreens besondere Effekte erzielen lassen. Der Verschwindedruck wird angewendet, um schwarze Rahmen oder Touchpunkte an definierten Stellen anzuzeigen. Die Bedruckung erfolgt vorzugsweise in Schwarz. Ist das Display ausgeschaltet erscheint die Oberfläche durchgehend schwarz. Mit Einschalten des Displays erscheinen die bedruckten Bereiche als Rahmen, ausgeblendete Bereiche oder feste Menüpunkte. Somit können Kanten auf der Glasscheibe, etwa um ausgewählte Betriebsmodule, hervorgehoben werden, ohne dass ein Leuchtmittel (z.B. LED) leuchtet.

In einer weiteren, vorteilhaften Ausführungsform der Erfindung umfasst der Automat ein Schließsystem zum Öffnen und Schließen des Korpus. Bei dem Schließsystem handelt es sich vorzugsweise um ein elektronisches Schließsystem. Es kann mit einem elektronischen Schlüssel, z.B. auf einem mobilen Datenträger, wie einer RFID-Karte oder einem Code auf dem Handydisplay, oder über eine im Tastenfeld oder auf dem Display eingegebene PIN-Nummer betätigt werden. Das Schließsystem des Automaten betreibt einen mechanischen Ver- und Entriegelungsmechanismus, der hinter der Glasscheibe im Korpus angeordnet ist und den Korpus mit dem Türelement verschliesst bzw. öffnet. Vorteilhafterweise ist die Position des mechanischen Ver- und Entriegelungsmechanismus von außen nicht sichtbar. Auf der Vorderseite des Türelementes ist insbesondere kein Schloss oder kein vergleichbares Bauteil angeordnet. Der gesamte Ver- und Entriegelungsmechanismus ist vollständig hinter dem Türelement, also auf der Innenseite des Türelementes und im Innenraum des Automaten angeordnet. Dies birgt wichtige Sicherheitsvorteile, da eine Beschädigung des mechanischen Ver- und Entriegelungsmechanismus durch die unbekannte Position erschwert wird.

In einer vorteilhaften Weiterbildung kann der Ver- und Entriegelungsmechanismus zusätzlich zu dem elektronischen Schließsystem mit einem mechanischen Not-Betätigungssystem betätigt werden kann. Das mechanische Not-Betätigungssystem kann als Seilzug-/Spindelsystem ausgebildet sein, das über ein Bohrloch an einer vordefinierten Position im Korpus eine Spindel betätigt, die in Eingriff mit dem mechanischen Ver- und Entriegelungsmechanismus steht.

Das Türelement ist um eine vertikale Achse schwenkbar am Korpus gelagert. Die vertikale Schwenkachse für das Türelement kann auf der rechten oder linken Seite des Automaten angeordnet sein. Während des operativen Betriebs verschließt und verriegelt das Türelement den Korpus des Automaten auf abgesicherte Weise. Der Begriff "abgesichert" umfasst zwei Aspekte: Zum einen ist der Ver- und Entriegelungsmechanismus nicht auf der Vorderfront des Türelementes oder an einem sonstigen Außenelement des Automaten positioniert, noch ist er von außen sichtbar. Zum anderen kann er nur mit einem elektronischen Sicherungssystem entsichert werden. Die Einstellungen des elektronischen Sicherungssystems sind konfigurierbar. So kann die Entsicherung in einer einfachen Ausführungsform der Erfindung nur durch Erfassen eines elektronischen Codes erfolgen. In komplexeren Ausführen können zusätzliche Sicherungsmaßnahmen notwendig sein, wie z.B. das Erfassen von Anwenderdaten und ein Abgleich mit Referenzdaten auf dem Server. Das Türelement kann insbesondere in einem Winkel bis zu annährend 90° in einen geöffneten Zustand geschwenkt werden, falls das elektronische Schließsystem geöffnet wurde. Da gemäß einer bevorzugten Ausführungsform der Erfindung das Türelement annähernd dieselbe Bauhöhe aufweist, wie der Korpus des Automaten, entsteht der technische Vorteil, dass beim Öffnen der Türe der gesamte Innenbereich des Korpus bzw. des Automaten, also der Innenraum des Automaten über die gesamte Höhe und Breite, zugreifbar, was sich besonders vorteilhaft für Wartungs- und Servicearbeiten auswirkt. Diese können dann schneller und einfacher ausgeführt werden, da die Bauteile leichter zugänglich sind.

In einer weiteren, vorteilhaften Ausführungsform der Erfindung ist im Korpus des Automaten ein Federelement angeordnet, das bei einem Verschließvorgang also bei einem Verschwenken des Türelementes von einem geöffneten in einen geschlossenen Zustand eine einer Schließbewegung entgegenwirkende Kraft ausübt. Dadurch entsteht eine "Soft-Close"-Haptik. Mit dieser Konstruktion kann diese Haptik vorteilhafterweise ohne den Einbau von kostenintensiven und konstruktiv aufwändigen Stoßdämpfern bereitgestellt werden.

In einer weiteren, vorteilhaften Ausführungsform der Erfindung umfasst der Korpus des Automaten eine selbsttragende Rahmenkonstruktion, insbesondere aus Metall, die mit unterschiedlichen Beplankungsmaterialien (Glas, Metall, Holz, Kunststoff etc.) beplankt werden kann. Weiterhin können sowohl am Korpus und/oder an dem Türelement Anwender-spezifische Informationsfelder, z.B. mit Werbebotschaften, dargestellt werden.

In einer weiteren, vorteilhaften Ausführungsform der Erfindung weist das Türelement eine Sandwich Konstruktion auf. Die Sandwich Konstruktion umfasst mehrere Schichten und insbesondere eine äußere Glasschicht (die Glasscheibe an sich), eine Metallschicht, eine Elektronikschicht zum Vorhalten von Elektronikbauteilen und eine innere Abdeckschicht, insbesondere aus Metall, die zum Abdecken der Elektronikbauteile dient. Durch die Sandwich Konstruktion kann die Einbruchsicherheit erhöht werden.

In einem zweiten Aspekt bezieht sich die Erfindung auf ein Türelement für einen Automaten. Das Türelement ist einbruchsicher ausgestaltet und weist eine durchgehende und überwiegend oberflächenbündige Vorderfront mit integrierten Betriebsmitteln auf, wobei die Vorderfront vorzugsweise als berührungssensitives Display ausgebildet ist.

Gemäß einem Aspekt der Beschreibung, wird offenbart: ein Verfahren zum Steuern und Betreiben eines Automaten, insbesondere eines Kartenautomaten, der u.a. zur Ausgabe von Tickets oder Karten ausgebildet sein kann. Das Verfahren umfasst folgende Verfahrensschritte:
- Erfassen eines Eingabesignals des Anwenders auf einem Betriebsmodul des Automaten, z.B. auf einer berührungssensitiven Bildschirmoberfläche des Automaten (z.B. zur Auswahl einer Zahlungsmodalität oder zur Eingabe von Autorisierungsdaten). Das Eingabesignal kann als Geste bzw. Touchsignal auf einem Touchscreendisplay erfasst werden. Das Erfassen des Eingabesignals kann auch durch das Erfassen des Einwurfes von Münzen oder des Einführens einer Geldkarte oder durch sonstige Eingaben auf anderen Betriebsmodulen ausgebildet sein.
- Erzeugen von Instruktionen zum Ansteuern des Automaten in einen geänderten Betriebszustand in Antwort auf das erfasste Eingabesignal
- Ausführen der erzeugten Instruktionen. Die Instruktionen können Bedieninstruktionen sein, die sich an den Anwender richten (z.B. eine Instruktion zur Eingabe einer Karte oder von Bargeld und die auf einem Bildschirmelement ausgegeben werden) oder es kann sich bei den Instruktionen auch um Befehle handeln, die unmittelbar von dem Automaten ausgeführt werden müssen (wie z.B. das Bedrucken einer vorrätigen Karte, die Ausgabe von Signalen auf einer Benutzeroberfläche oder das Auslösen eines Abzählvorganges für Münzgeld etc.)
- Prüfen, ob die Instruktionen korrekt und vollständig ausgeführt worden sind. Hier kann also beispielsweise automatisch verifiziert werden, ob die Eingabe von Geld, einer Karte, von Anwendereingaben und/oder von Autorisierungsdaten formal korrekt und vollständig ausgeführt worden ist. Bejahendenfalls wird folgender Schritt initiiert:
- Ausgeben einer Karte (z.B. als bedruckte/r Papierbon oder Kunststoffkarte, als Quittung oder als Chipkarte). Optional oder kumulativ kann auch Information, insbesondere als ein Datensatz ausgegeben werden, der z.B. auf dem Display angezeigt werden kann.

Die ausgegebene Karte kann mit oder ohne Werteinheit ausgegeben werden. Die Werteinheit kann in Form eines digitalen Codes (z.B. RFID-Transpondercode) oder als Barcode etc. auf der Karte aufgedruckt sein. Die Werteinheit kann von einem nachgelagerten System (Kaufsystem, Zugangskontrollsystem, Ticketsystem, Parksystem etc.) als Berechtigung ausgewertet werden.

In dem Automaten ist ein Vorratsspeicher angeordnet, in dem eine Anzahl von Karten gelagert sind. Jede dieser vorgehaltenen Karten des Automaten trägt eine eineindeutige digitale, elektronische und/oder analoge Kennung (z.B. als Barcode). Die Kennung ist der Karte zugeordnet. Diese eineindeutige Kennung (UID) ist ebenfalls in dem Server hinterlegt. Wird eine Karte vom Automaten ausgegeben, wird automatisch ein Ausgabedatensatz vom Automaten an den Server übermittelt, der signalisiert, dass die Karte mit der jeweiligen eineindeutigen Kennung ausgegeben worden ist. Nach Ausgabe der Karte durch den Automaten und nach Zusendung der der ausgegebenen Karte zugeordneten eineindeutigen Kennung an einen zentralen Server kann die eineindeutige Kennung - ggf. mit weiteren Daten - an nachgelagerte Systeme (wie z.B. an ein Zugangsberechtigungssystem, ein Bezahlsystem, etc.) weitergeleitet werden. In dieser Ausführungsform der Erfindung werden keine Sitzungsdaten (also Daten in Zusammenhang mit der aktuellen Bedienung des Automaten durch Eingabe des Anwenders - Sitzungsdaten können sich auf Eingaben des Anwenders oder auf persönliche Daten des Anwenders, wie Name, Geldbetrag etc. handeln) auf die Karte geschrieben.

Optional können noch weitere Datensätze in dem Ausgabedatensatz übermittelt werden. In der bevorzugten Ausführungsform der Erfindung wird die ausgegebene Karte nicht vom Automaten beschrieben. Damit kann die Sicherheit deutlich erhöht werden, da auch bei Verlust der Karte, keine persönlichen Daten des Anwenders und keine Sitzungsdaten auf der Karte abgelegt werden. Somit werden auf der Karte keine Daten in Zusammenhang mit vorhergehenden Eingaben, Eingangssignalen oder persönlichen Daten des Anwenders abgelegt.

Gemäß einer bevorzugten Ausführungsform des Verfahrens, kann - in zeitlicher Hinsicht - vor dem Erfassen des Eingabesignals ein Anwesenheitssignal mittels eines Detektors zur Aktivierung des Verfahrens erfasst und verarbeitet werden. Dies hat den technischen Vorteil, dass nicht intendierte Bedienungen des Automaten verhindert werden können, falls z.B. eine Person ein Bedienfeld im Vorbeigehen nur streift ohne dies betätigen zu wollen. Dann kann der Detektor, z.B. in Form eines Infrarotdetektors die Anwesenheitszeit des vermeintlichen Anwenders erfassen und bei einer zu kurz bemessenen Anwesenheit die Module des Automaten inaktiviert und unbeleuchtet belassen. Die vom Detektor erfassten Signale werden lediglich automatenintern verarbeitet und nicht an den Server bzw. die Datenbank übersendet. Dies ist ein Vorteil hinsichtlich der Sicherheit der zu verarbeitenden und zu übertragenden Datensätze, da keine persönlichen Datensätze (in diesem Fall Bilddaten des Anwenders) übertragen werden.

Gemäß einer Weiterbildung des Verfahrens, können vor dem Erfassen des Eingabesignals den Anwender identifizierende Autorisierungsdaten erfasst werden. Die erfassten Autorisierungsdaten können auf anonymisierte Weise an einen in Datenaustausch stehenden Server gesendet und dort speichert werden, wobei eine Deanonymisierung nur auf dem Server in Interaktion mit einer server-basierten Sicherungsmaßnahme möglich ist. Dabei ist sichergestellt, dass eine Deanonymisierung der erfassten Autorisierungsdaten nicht auf der ausgegebenen Karte und nicht auf dem Automaten möglich ist, da die zur Deanonymisierung erforderliche Sicherungsmaßnahme (z.B. ein kryptologischer Schlüssel) nur auf dem Server verfügbar ist. Damit kann vorteilhafterweise die Sicherheit des Verfahrens gesteigert werden.

Der Automat kann in drei Betriebsmodi betrieben werden. Insbesondere in:
- einem operativen Modus, in welchem der Automat zur Ausgabe der Karte betrieben wird und sich in einem geschlossenen Zustand befindet,
- einem Kassenmodus, in welchem im Automaten befindliche Werteinheiten entnommen werden
- einem Servicemodus zum Service oder zur Wartung des Automaten und seiner Module,
wobei der Servicemodus oder der Kassenmodus automatisch initiiert werden, wenn eine Servicekennung oder eine Kassenkennung vom Automaten eingelesen wurde und ein elektronisches Schließsystem das Türelement entriegelt und geöffnet hat, wobei auf der berührungssensitiven Bildschirmeinheit automatisch ein Servicemenü oder ein Kassenmenü ausgegeben wird. Dabei ist es vorgesehen, dass das Servicepersonal oder das Kassenpersonal über eine entsprechende spezifische Kennung (z.B. in Form eines elektronischen Schlüssels auf einer gegebenenfalls zusätzlichen Karte oder auf einem anderen, gegebenenfalls zusätzlichen, mobilen Datenträger) verfügt, die über die Benutzeroberfläche des Automaten eingelesen wird. Falls diese Kennung eingelesen wird, wird automatisch der Kassen- oder Servicemodus für den Automaten initiiert, der in der Regel weitere Eingabe erfordert.

Gemäß einer bevorzugten Ausführungsform des Verfahrens, werden Fehlbedienungen automatisch erfasst und in einer Fehlerbehandlungsroutine verarbeitet. Es kann automatisch eine Korrekturmaßnahme auf der berührungssensitiven Bildschirmeinheit ausgeben werden.

Gemäß einem weiteren Aspekt der Erfindung, wird die vorstehende Aufgabe gelöst durch ein Automatensystem mit zumindest einem Automaten, insbesondere Kartenautomaten, wie oben beschrieben und einem zentralen Server, wobei der jeweilige Automat und der zentrale Server über ein Netzwerkprotokoll (z.B. http/s) in Datenaustausch stehen, und wobei der Automat nach Erfassen eines Eingabesignals auf dem Automaten eine eineindeutige Kennung der Karte an den zentralen Server weiterleitet. Dabei ist es zum Schutz von Angriffen sichergestellt, dass die Kennung mit einem der Eingabesignale, mit Sitzungsdaten und/oder weiteren Identifikationsdaten des Anwenders ausschließlich auf dem Server verknüpft und gespeichert wird, um das System sicher gegenüber Angriffen zu machen. Die Kennung kann gegebenenfalls nach Ausgabe der Karte an den zentralen Server weitergeleitet werden.

Weitere Einzelheiten der Erfindung und insbesondere beispielhafte Ausführungsformen des erfindungsgemäßen Automaten oder Automatensystems werden im Folgenden anhand der beigefügten Zeichnungen erläutert.

Es zeigen:
- Fig. 1: Eine schematische Darstellung eines erfindungsgemäßen Automatensystems mit einem Server;
- Fig. 2: Eine perspektivische Darstellung eines Automaten mit dessen Betriebsmodulen anhand eines Ausführungsbeispiels;
- Fig. 2a und Fig. 2b: zeigen den Automaten von Fig. 2 in anderen Ausführungsform der Erfindung mit anderen Abmessungen und Konfigurationen.
- Fig. 3: eine perspektivische Ansicht des Türelementes des Automaten von innen gesehen;
- Fig. 4: eine perspektivische Darstellung eines Korpus' des Automaten;
- Fig. 5: eine weitere Darstellung des Korpus', der zur Montage von Seitenwänden vorbereitet ist;
- Fig. 6: das Türelement und dessen Verbindung mit dem Korpus im geöffneten Zustand;
- Fig. 7: ein Ablaufdiagramm eines Betriebsverfahrens eines Automaten; und
- Fig. 8: eine Ansicht eines Ver- und Entriegelungsmechanismus zum Öffnen und Schließen des Automaten.

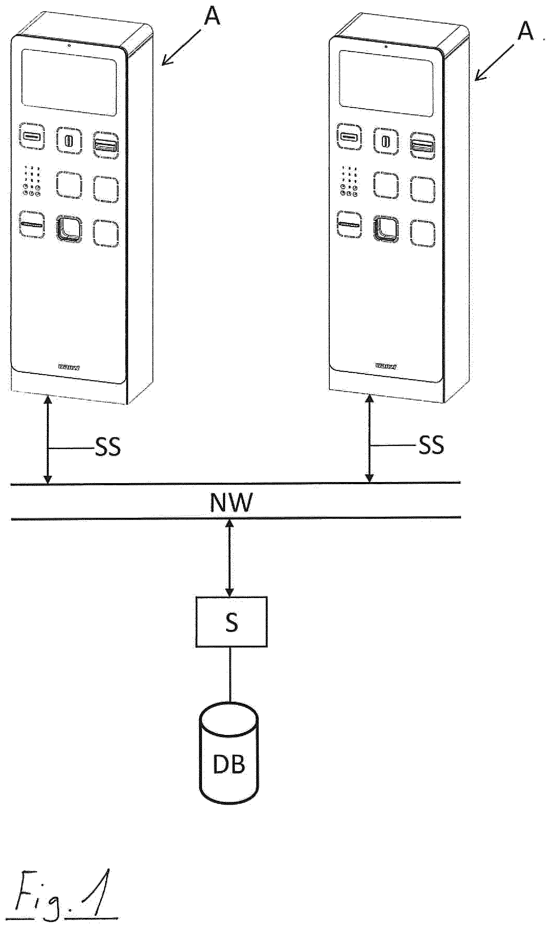

In **Figur 1** ist eine schematische Darstellung eines Automatensystems mit einem oder mehreren Automaten A gezeigt, die zur Ausgabe von Karten bestimmt sein können. Das Automatensystem umfasst zwei Automaten A, die eine als Glasscheibe ausgebildete durchgehende Benutzeroberfläche als Vorderfront V umfassen. Die Automaten A sind über eine Server-Schnittstelle SS, die als Netzwerk NW ausgebildet sein kann, mit einem zentralen Server S verbunden. An den Server S kann eine Datenbank angeschlossen sein. Bei dem Netzwerk kann es sich um ein IP-basiertes Protokoll, z.B. um http/s, handeln. Alternativ können auch WLAN oder LAN Netzwerkprotokolle zum Einsatz kommen. Ein WLAN-Übertragungsprotokoll kann z.B. auf dem IEEE 802.11 Standard basieren. Die Server-Schnittstelle SS ist vorzugsweise bidirektional und dient zur Übertragung von digitalen Daten vom und zum Automaten A.

Der Automat A kann zum Bedrucken von auszugebenden Karten ausgebildet sein. Dazu kann ein Transpondersystem mit einer RFID-Karte eingesetzt werden. Eine RFID-Karte ist eine kontaktlose Chipkarte mit funktechnischer Daten- und Energieübertragung. Die RFID-Karte besteht aus in der Regel zwei physikalischen Trägerschichten (z.B. dünne Kunststofffolien) in die ein RFID-Tag - also einen Chip, der den Prozessor, Speicher und den Transponder enthält - sowie die Sende- und Empfangsantenne eingelassen sind. Zur Verbesserung der Sicherheit können in einer bevorzugten Ausführungsform der Erfindung in den elektronischen Schaltkreis der Karte weitere Funktionalitäten integriert sein, wie eine Fehlerkorrektur, ein Passwortschutz, eine Verschlüsselung und ein Schreibschutz. Zudem können Rechte zugewiesen sein, so dass die Karte - je nach Anwendung - z.B. nur ausgelesen (oder beschrieben und ausgelesen) werden kann. Der in die Transponderkarte integrierte Tag kann als aktiver Tag, als ein semi-passiver oder als passiver Tag ausgebildet sein. Die aktiven Tags haben einen Sender und möglicherweise eine aufladbare Batterie; die passiven entnehmen die benötigte Energie aus dem Trägersignal des RFID-Lesegerätes. Die RFID-Übertragung ist auf den Nahbereich ausgerichtet und kann je nach RFID-Frequenz Entfernungen zwischen einigen wenigen Zentimetern und einigen Metern überbrücken, wobei die aktiven RFID-Karten eine wesentlich weitere Reichweite gegenüber den passiven haben. Die Karten arbeiten verschleißfrei, sind unempfindlich gegen Verschmutzung und Feuchtigkeit und werden bei der Kontrolle lediglich in die Nähe eines RFID-Lesegerätes gehalten, bei Zutrittskontrollen brauchen sie nicht aus der Tasche geholt werden. Das RFID-Lesegerät kann Bestandteil des Automatensystems oder eines nachgelagerten Anwendungssystems sein.

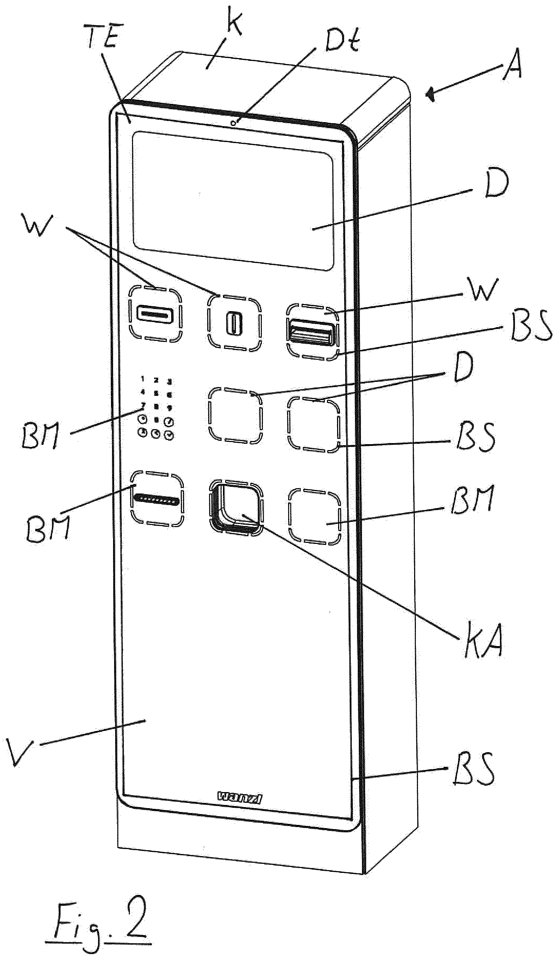

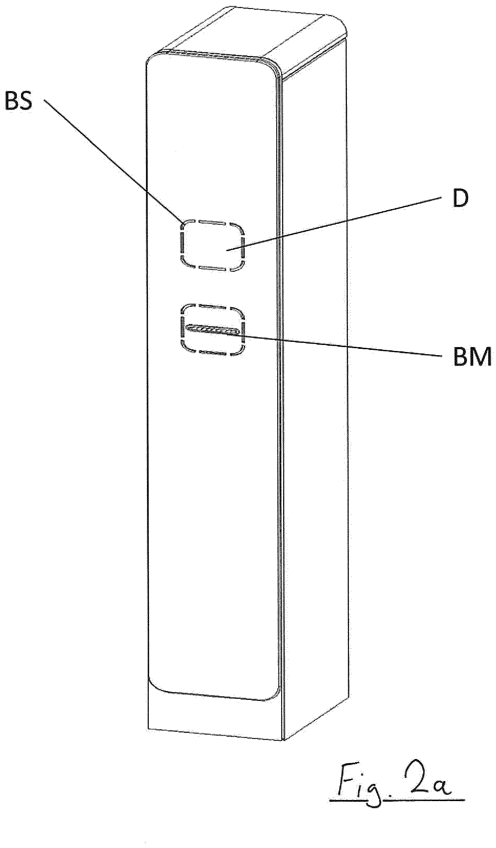

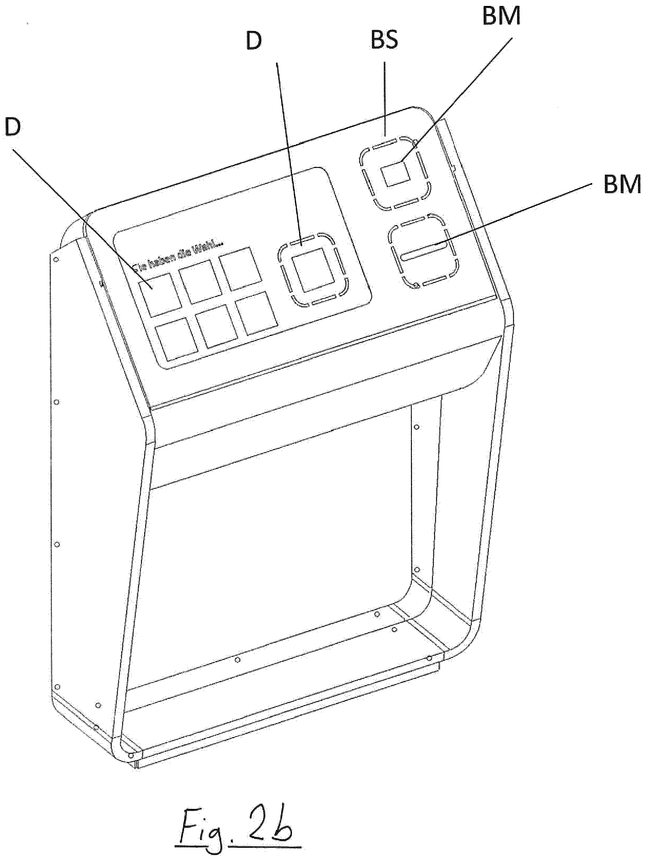

**Figur 2** zeigt in einer perspektivischen Ansicht den Automaten A mit weiteren Details. Der Automat A umfasst eine Vorderfront V, die als durchgehende Glasscheibe ausgebildet ist und einen Korpus K. In die Vorderfront V sind mehrere Betriebsmodule BM integriert. Die Vorderfront V verschließt den Korpus K im operativen Modus des Automaten (also im Normalbetrieb) vollständig und auf abgesicherte Weise. Die Betriebsmodule BM dienen zum Betrieb und zur Steuerung des Automaten A. Die Betriebsmodule BM sind alle derart in die Glasscheibe integriert, dass die Vorderfront eine bündige Fläche bildet. Die Betriebsmodule BM umfassen unterschiedliche Module:
- mehrere Bildschirmelemente D, die zur Ein- und Ausgabe von Daten bestimmt sind
- mehrere Ein- und Ausgabeeinheiten für Werteinheiten W, die zur Ein- und Ausgabe von Werteinheiten, wie Karten oder Bargeld bestimmt sind. Zumindest eine der Ein- und Ausgabeeinheiten für Werteinheiten W ist als Kartenausgabeeinheit ausgebildet und dient zur Ausgabe einer Karte. In Figur 2 sind diesen in dem dargestellten Ausführungsbeispiel in der oberen Betriebsmittelzeile angeordnet. Das mittlere Betriebsmittel in der unteren Zeile in Fig. 2 ist hier ein Münzausgeber MA. In einer bevorzugten Ausführungsform der Erfindung ist die ausgegebene Karte mit Informationen oder Daten bedruckt (z.B. von einem integrierten RFID-Drucker) in Antwort auf eingegeben Daten des Anwenders. Zusätzlich kann auch eine Münzausgabeeinheit ausgebildet sein.
- Ein Tastenfeld mit mechanischen Tastern zur Eingabe von Daten, z.B. zur Eingabe von PIN-Daten. Alternativ oder kumulativ kann das Tastenfeld nicht durch mechanische Tasten, sondern in Form einer virtuellen Tastatur ausgebildet sein, die in ein Display oder ein Bildschirmelement D eingeblendet wird.

Die Vorderfront V kann neben den Betriebsmodulen BM einen Detektor Dt umfassen. Der Detektor Dt kann als Kamera im oberen Bereich des Automaten ausgebildet sein und z.B. die Anwesenheit eines Anwenders in einer Bedienposition erfassen. Der Detektor Dt kann auch als Radar- oder Ultraschallsensor ausgebildet sein. Des Weiteren kann die Vorderfront V ein Logo-Element im unteren Bereich umfassen. Dies dient zur Einblendung von zusätzlichen Informationen auf der Vorderfront V des Automaten. Das Logo-Element kann nach Kundenwunsch gestaltet und (z.B. hinsichtlich der Beleuchtung) konfiguriert werden.

Wie in Fig. 2 ersichtlich, kann die Anordnung der Betriebsmodule BM kachelartig strukturiert sein, um eine bessere Übersichtlichkeit und schnellere Bedienbarkeit zu erzielen, indem die in Folge zu betätigenden Betriebsmodule BM ergonomisch benachbart angeordnet sind. Die Auswahl und Anordnung der Betriebsmodule BM ist konfigurierbar und unterscheidet sich von Automat zu Automat. Abweichend von der in Fig. 2 dargestellten, beispielhaften dreizeiligen Anordnung, kann auch nur eine zweizeilige oder eine andere Anordnung vorgesehen sein.

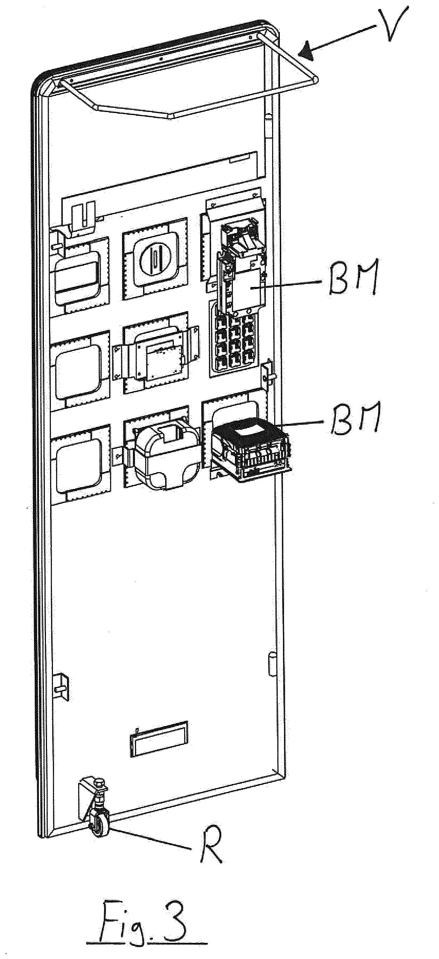

**Figur 3** zeigt ein Türelement TE in perspektivischer Ansicht vom Innenraum gesehen. Die innenseitige bzw. rückwärtige Ansicht des Türelementes TE zeigt die integrierten Betriebsmodule BM. Beispielhaft sind hier ein Banknotenleser - und - Zähler, ein Münzzähler und ein Karteneingabemodul sowie ein Kartenausgabeeinheit KA erwähnt. Je nach Anwendung können hier noch weitere oder andere Betriebsmodule BM integriert werden. Im unteren Bereich ist auf der linken Seite ein Rollelement R dargestellt, das zum leichten Bewegen des Türelementes TE während des Öffnungs- und Schließvorganges des Automaten A dient. Im oberen Bereich ist eine auskragende Rahmenkonstruktion, vorzugsweise aus Metall, vorgesehen, die zum Eingriff mit dem Korpus K beim Schließen des Automaten A dient.

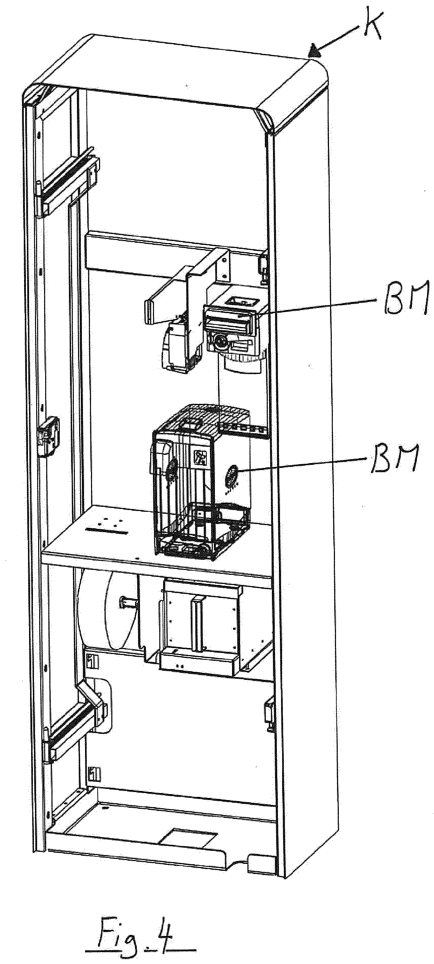

**Figur 4** zeigt den Korpus K in geöffnetem Zustand ohne Türelement TE. Im oberen rechten Bereich ist ein Betriebsmodul BM zum Einwurf von Münzgeld ausgebildet. Die anderen Betriebsmittel BM können zum Bedrucken und zum Ausgeben von Karten aus einem Vorratsspeicher ausgebildet sein. Je nach Konfiguration können noch weitere Betriebsmodule BM integriert werden.

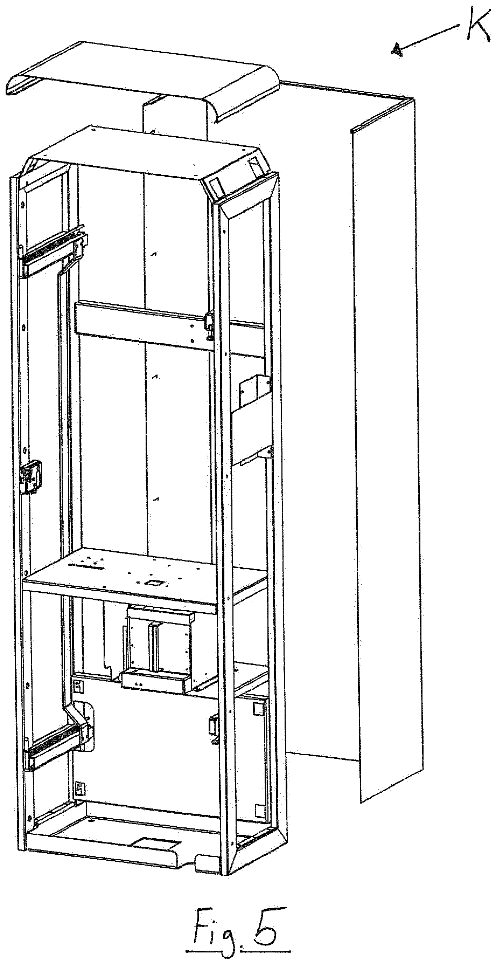

**Figur 5** zeigt eine perspektivische Ansicht des Korpus K mit einer gestellartigen Rahmenkonstruktion aus Metall. Die Rahmenkonstruktion ist selbsttragend und kann, wie in Fig. 5 angedeutet mit unterschiedlichen Materialien beplankt werden. Damit kann eine weitere Flexibilität und Kosteneinsparung erzielt werden.

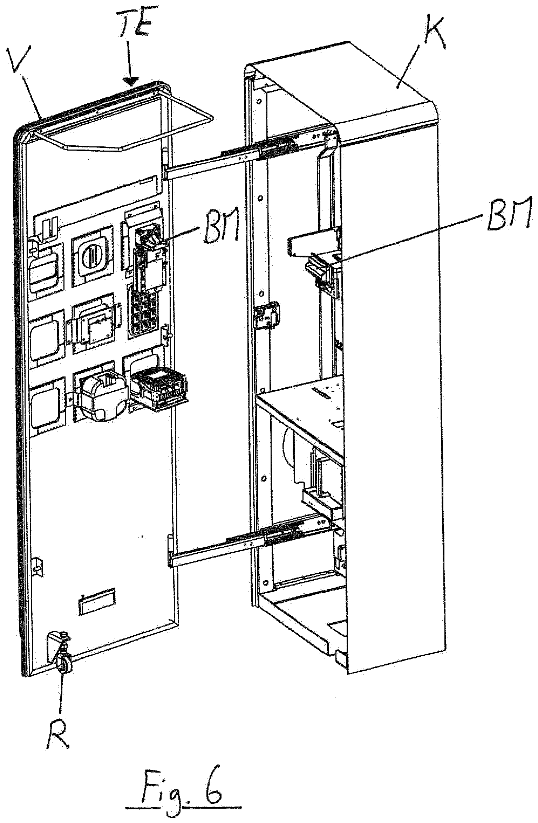

**Figur 6** zeigt das Türelement TE in Eingriff mit dem Korpus K in geöffnetem Zustand. Der geöffnete Zustand des Automaten A ist dann erforderlich, wenn die Kasse geleert werden muss (Kassenmodus) oder wenn der Automat gewartet werden muss (Servicemodus). Dies wird z.B. notwendig, wenn der Vorratsspeicher nicht mehr ausreichend Karten vorhält oder wenn einzelne Betriebsmodule BM gewartet werden müssen. Im operativen Modus während des (normalen) Betriebs des Automaten A ist der Automat geschlossen.

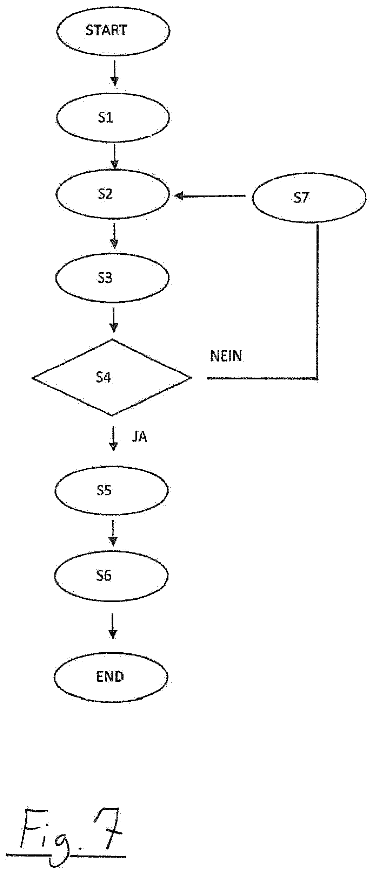

**Figur 7** ist ein Ablaufdiagramm des Verfahrens zum Betrieb des Automaten A in einem Ausführungsbeispiel. Nach dem Start des Verfahrens kann in Schritt S01 die Anwesenheit eines Anwenders in korrekter Bedienposition detektiert werden. Dies hat den Vorteil, dass die Betriebsmodule BM nur dann aktiviert werden oder freigeschaltet werden, wenn ein Anwender anwesend ist. Andernfalls können sich die Betriebsmodule BM in einem Stand-By Modus befinden, der stromsparend ist. In Schritt S1 wird ein Eingabesignal auf einem Betriebsmodul BM erfasst. Das Eingabesignal kann auf einem Bildschirmelement D erfasst werden, indem der Anwender beispielsweise angibt, welche Zahlungsmodalität er wünscht oder anwenden möchte. Auch kann das Eingabesignal direkt auf dem Kartenleser erfasst werden, indem das Einführen einer Karte als Eingabesignal erfasst wird. Auch kann das Einwerfen einer Münze als Eingabesignal dienen. In Schritt S2 wird eine

Instruktion oder eine Folge von Instruktionen generiert, die zum Ansteuern des Automaten A in Antwort auf das erfasste Eingabesignal dient. Die Instruktionen können sich einerseits an den Anwender zur weiteren Bedienung des Automaten richten und können andererseits direkt für den Automaten A ausgebildet sein. So kann die Instruktion beispielsweise darauf abstellen, dass in Antwort auf das erfasste Eingabesignal ein spezifisches Beleuchtungssegment BS aktiviert wird und durch die Beleuchtung signalisiert, dass im nächsten Bedienschritt eine Bedienung des jeweiligen Betriebsmoduls BM erforderlich ist. Dies hat den technischen Vorteil, dass der Anwender durch die spezifisch gesteuerte Beleuchtung von einzelnen Kacheln bzw. Betriebsmodulen BM quasi durch einen Betriebsablauf mit zugehörigen Eingaben geführt wird. Er wird von Eingabe zu Eingabe geleitet. Ebenso kann die Instruktion bewirken, dass der Automat ein Fehlersignal meldet, im Falle einer fehlerhaften Eingabe.

In Schritt S4 wird geprüft, ob die Instruktion (vom Anwender oder vom Automaten A) korrekt und vollständig ausgeführt worden ist. Nur falls dies bejaht werden kann, wird die Karte in Schritt S5 ausgegeben. Andernfalls kann in Schritt S7 eine modifizierte Instruktion erzeugt werden, die dann - wie oben beschrieben - weiterverarbeitet wird. In Schritt S6 kann der eineindeutige Identifikator UID der ausgegebenen Karte an den Server S übermittelt werden. Der eineindeutige Identifikator UID kann durch weitere Sicherungsmaßnahmen auf dem Server (und nur dort) verarbeitet werden, um weitere Datensätze zu berechnen, wie beispielsweise statistische Auswertungen über die Anzahl von ausgegeben Karten in einem bestimmten Zeitraum und die Notwendigkeit von Auffüllmaßnahmen von Karten im Automaten oder das Nachhalten, welche Aktionen am Automaten ausgeführt worden sind, um im Falle eines Missbrauchs die Situation rekonstruieren zu können. Auch dies erhöht die Sicherheit des Automaten.

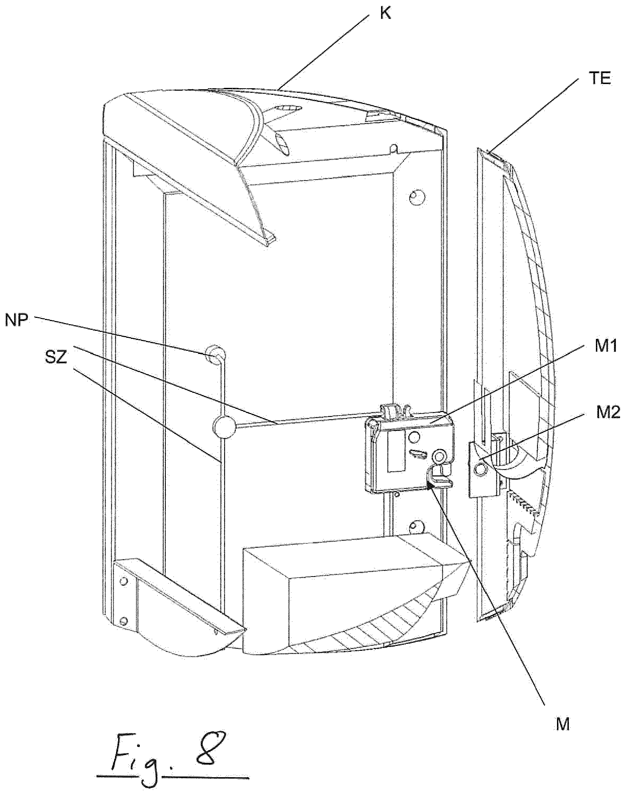

**FIG. 8** zeigt eine perspektivische Ansicht eines Wandelementes des Automaten A von innen in Bezug auf den montierten Automaten. Dort ist der mechanische Ver- und Entriegelungsmechanismus M, der zum gesicherten Öffnen und Verschließen des Automaten A dient, mit weiteren Details gezeigt. Die Schlossverriegelung umfasst eine Notfallentriegelung bei eventuellem Spannungsverlust im Automaten A. Wie in Fig. 8 ersichtlich umfasst der mechanische Ver- und Entriegelungsmechanismus M in dem dort dargestellten Beispiel ein elektronisch betätigbares Schloss M1, das im Korpus K (Schrankgehäuse) verbaut ist und das in Eingriff steht mit einem dazugehörigen Verschlussbolzen M2. Der Verschlussbolzen M2 ist fest mit dem Türelement TE verbunden oder an diesem befestigt oder integriert.

Wird die Türe elektronisch geöffnet, entriegelt Schloss M1 und gibt den Bolzen M2 frei. Das Türelement kann ausgezogen werden.

Tritt der Fall ein, dass zum Beispiel die Spannungsversorgung der Schlösser nicht mehr vorhanden ist besteht die Möglichkeit, dass an einer vordefinierten Notposition NP im Schrankgehäuse ein Loch gebohrt und so der Zugang zur Notentriegelung offengelegt werden kann. Über eine Drehbewegung in Notposition NP werden Seilzüge SZ angezogen. Die Zugbewegung der Seilzüge SZ bewirkt ein mechanisches Öffnen aller Schlösser.

Alle Verfahrensschritte des Verfahrens können durch elektronische Vorrichtungen (Schaltkreise) implementiert werden, die zum Ausführen des jeweiligen Verfahrensschrittes geeignet sind. Umgekehrt können alle Funktionen, die von gegenständlichen Merkmalen ausgeführt werden, ein Verfahrensschritt eines Verfahrens sein. So kann z.B. der Verfahrensschritt "Erzeugen von Instruktionen" durch einen Instruktionsbaustein implementiert werden, der über die genannte, entsprechende Funktionalität verfügt.

Der Schutzbereich der vorliegenden Erfindung ist durch die Ansprüche gegeben.

## Patentansprüche

1. Automat (A) zum Bedrucken und/oder zur Ausgabe von Karten und/oder zur Ausgabe von Werteinheiten und/oder zur Ausgabe von Informationen, umfassend:
- Ein Türelement (TE) und einen Korpus (K), wobei in dem Türelement (TE) eine Mehrzahl von integrierten Betriebsmodulen (BM) ausgebildet ist, wobei das Türelement (TE) um eine vertikale Achse schwenkbar an dem Korpus (K) gelagert ist,
wobei eine Glasscheibe und die in diese integrierten Betriebsmodule (BM) nach der Montage des Automaten (A) einstückig ausgebildet sind und wobei die Betriebsmodule (BM)
∘ mehrere Bildschirmelemente (D) zur Ein- und Ausgabe von Daten und
∘ mehrere Ein- und Ausgabeeinheiten (W) zur Ein- und/oder Ausgabe von Werteinheiten und eine Kartenausgabeeinheit (KA) umfassen
- wobei die Bildschirmelemente (D) als berührungssensitiver Bildschirm ausgebildet sind
**dadurch gekennzeichnet, dass**
- eine Vorderfront (V) des Türelementes (TE) mit den darin integrierten Betriebsmodulen (BM) vollständig als eine durchgehende Glasscheibe ohne Vorsprünge, die aus der Ebene der Vorderfront hervorstehen, ausgebildet ist, in die die Betriebsmodule (BM) oberflächenbündig integriert sind und, dass die Betriebsmodule (BM) während der Herstellung des Automaten (A) in die durchgehende Glasscheibe eingesetzt und abgedichtet sind.

2. Automat (A) nach dem vorangehenden Patentanspruch, bei dem die Betriebsmodule (BM) während der Fertigung flexibel und im montierten Zustand nicht werkzeuglos austauschbar sind und zu einer durchgehenden, monolithischen Einheit integriert ausgebildet sind.

3. Automat (A) nach einem der vorangehenden Patentansprüche, bei dem der Automat (A) eine Beleuchtungseinheit umfasst, die mehrere Beleuchtungssegmente (BS) hat, wobei insbesondere eines der Beleuchtungssegmente (BS) auf der Vorderfront (V) des Türelementes (TE) angeordnet ist und entlang einer Außenkante des Türelementes (TE) verläuft.

4. Automat (A) nach einem der vorangehenden Patentansprüche, bei dem das Türelement (TE) und insbesondere zumindest ein Metallrahmenelement des Türelementes (TE) annähernd dieselbe Bauhöhe aufweist, wie der Korpus (K) des Automaten (A).

5. Automat (A) nach einem der vorangehenden Patentansprüche, bei dem der Automat (A) ein elektronisches Schließsystem zum Öffnen und Schließen des Korpus (K) umfasst, das mit einem elektronischen Schlüssel betätigt wird.

6. Automat (A) nach einem der vorangehenden Patentansprüche, bei dem ein elektronisches Schließsystem des Automaten (A) einen mechanischen Ver- und Entriegelungsmechanismus (M) betreibt, dessen Position von außen nicht sichtbar ist.

7. Automat (A) nach einem der vorangehenden Patentansprüche, bei dem im Korpus (K) des Automaten (A) ein Federelement (FE) angeordnet ist, das bei Verschwenken des Türelementes (TE) von einem geöffneten in einen geschlossenen Zustand eine einer Schließbewegung entgegenwirkende Kraft ausübt.

8. Automat (A) nach einem der dem vorangehenden Patentansprüche, bei dem der Korpus (K) des Automaten (A) eine selbsttragende Rahmenkonstruktion (R) umfasst, die mit unterschiedlichen Beplankungsmaterialien beplankt werden kann.

9. Automat (A) nach einem der vorangehenden Patentansprüche, bei dem das Türelement (TE) eine Sandwich Konstruktion aufweist und insbesondere eine äußere Glasschicht, eine Metallschicht, eine Elektronikschicht zum Vorhalten von Elektronikbauteilen und eine innere Abdeckschicht umfasst und/oder bei dem das Glas der durchgehenden Glasscheibe Einfachsicherheitsglas ist und mit einem Verschwindedruck behandelt ist.

10. Türelement (TE) zur Verwendung für einen Automaten (A) nach einem der vorstehenden auf den Automaten (A) bezogenen Patentansprüche, wobei in dem Türelement (TE) eine Mehrzahl von integrierten Betriebsmodulen (BM) ausgebildet ist, wobei das Türelement dazu ausgebildet ist, um eine vertikale Achse schwenkbar an einem Korpus (K) gelagert zu werden, wobei eine Glasscheibe und die in diese integrierten Betriebsmodule (BM) nach der Montage des Automaten (A) einstückig ausgebildet sind,
und wobei die Betriebsmodule (BM) mehrere
Bildschirmelemente (D) zur Ein- und Ausgabe von Daten und mehrere Ein- und Ausgabeeinheiten (W) zur Ein- und/oder Ausgabe von Werteinheiten und eine Kartenausgabeeinheit (KA) umfassen
wobei die Bildschirmelemente (D) als berührungssensitiver Bildschirm ausgebildet sind
**dadurch gekennzeichnet, dass**
eine Vorderfront (V) des Türelementes (TE) mit den darin integrierten Betriebsmodulen (BM) vollständig als eine durchgehende Glasscheibe ohne Vorsprünge, die aus der Ebene der Vorderfront hervorstehen, ausgebildet ist, in die die Betriebsmodule (BM) oberflächenbündig integriert sind und, dass die Betriebsmodule (BM) während der Herstellung des Automaten (A) in die durchgehende Glasscheibe eingesetzt und abgedichtet sind.

11. Automatensystem mit zumindest einem Automaten (A) nach einem der vorstehenden auf den Automaten (A) bezogenen Patentansprüche, und einem zentralen Server (S), wobei der jeweilige Automat (A) und der zentrale Server (S) über ein Netzwerkprotokoll (NW) in Datenaustausch stehen, und wobei der Automat (A) nach Erfassen eines Eingabesignals auf dem Automaten (A) eine eineindeutige Kennung der Karte (UID) an den zentralen Server (S) weiterleitet und wobei die Kennung (UID) mit einem Eingabesignal und/oder Identifikationsdaten eines Anwenders ausschließlich auf dem Server (S) verknüpft und gespeichert wird.

## Claims

1. Machine (A) for printing and/or outputting cards and/or for outputting units of value and/or for outputting information, comprising:
- a door element (TE) and a body (K), wherein a plurality of integrated operating modules (BM) are formed in the door element (TE), wherein the door element (TE) is mounted on the body (K) pivotably about a vertical axis,
wherein a glass plate and the operating modules (BM) integrated therein are formed in one piece after the assembly of the machine (A) and wherein the operating modules (BM) comprise
o multiple screen elements (D) for the input and output of data and
o multiple input and output units (W) for the input and/or output of units of value and a card outputting unit (KA),
- wherein the screen elements (D) are formed as a touch-sensitive screen,
**characterized in that**
- a front panel (V) of the door element (TE) with the operating modules (BM) integrated therein is formed completely as a continuous glass plate without projections extending out of the plane of the front panel in which the operating modules (BM) are integrated flush with the surface and **in that** the operating modules (BM) are inserted into the continuous glass plate and sealed off during the production of the machine (A).

2. Machine (A) according to the preceding patent claim, in which the operating modules (BM) are flexibly exchangeable during manufacture and not exchangeable without tools in the assembled state and are formed as integrated into a continuous, monolithic unit.

3. Machine (A) according to one of the preceding patent claims, in which the machine (A) comprises an illuminating unit, which has a number of illuminating segments (BS), wherein in particular one of the illuminating segments (BS) is arranged on the front panel (V) of the door element (TE) and runs along an outer edge of the door element (TE).

4. Machine (A) according to one of the preceding patent claims, in which the door element (TE) and in particular at least one metal frame element of the door element (TE) has at least approximately the same overall height as the body (K) of the machine (A).

5. Machine (A) according to one of the preceding patent claims, in which the machine (A) comprises an electronic closing system for opening and closing the body (K), which is actuated by an electronic key.

6. Machine (A) according to one of the preceding patent claims, in which an electronic closing system of the machine (A) operates a mechanical locking and unlocking mechanism (M), the position of which is not visible from the outside.

7. Machine (A) according to one of the preceding patent claims, in which a spring element (FE), which exerts a force counteracting a closing movement when the door element (TE) is pivoted from an open state into a closed state, is arranged in the body (K) of the machine (A).

8. Machine (A) according to one of the preceding patent claims, in which the body (K) of the machine (A) comprises a self-supporting frame structure (R), which can be panelled with different panelling materials.

9. Machine (A) according to one of the preceding patent claims, in which the door element (TE) has a sandwich structure and in particular comprises an outer glass layer, a metal layer, an electronics layer for providing electronic components and an inner covering layer and/or in which the glass of the continuous glass plate is single-pane safety glass and is treated with stealth effect printing.

10. Door element (TE) for being used for a machine (A) according to one of the preceding patent claims relating to the machine (A), wherein a plurality of integrated operating modules (BM) are formed in the door element (TE), wherein the door element (TE) is designed for being mounted on the body (K) pivotably about a vertical axis, wherein a glass plate and the operating modules (BM) integrated therein are formed in one piece after the assembly of the machine (A) and wherein the operating modules (BM) comprise multiple screen elements (D) for the input and output of data and multiple input and output units (W) for the input and/or output of units of value and a card outputting unit (KA),
wherein the screen elements (D) are formed as a touch-sensitive screen,
**characterized in that**
a front panel (V) of the door element (TE) with the operating modules (BM) integrated therein is formed completely as a continuous glass plate without projections extending out of the plane of the front panel in which the operating modules (BM) are integrated flush with the surface and **in that** the operating modules (BM) are inserted into the continuous glass plate and sealed off during the production of the machine (A).

11. Machine system comprising at least one machine (A) according to one of the preceding patent claims relating to the machine (A), and a central server (S), wherein the respective machine (A) and the central server (S) are in data exchange via a network protocol (NW), and wherein, after sensing an input signal on the machine (A), the machine (A) passes on a unique identifier of the card (UID) to the central server (S) and wherein the identifier (UID) is linked with an input signal and/or identification data of a user and stored exclusively on the server (S).

## Revendications

1. Machine automatique (A) permettant d'imprimer et/ou de sortir des cartes et/ou de sortir des unités de valeur et/ou de sortir des informations, comprenant :
- un élément de porte (TE) et un corps (K), une pluralité de modules de service intégrés (BM) étant réalisée dans l'élément de porte (TE), l'élément de porte (TE) étant monté sur le corps (K) de manière à pouvoir pivoter autour d'un axe vertical,
une plaque de verre et les modules de service (BM) intégrés dans celle-ci étant réalisés d'un seul tenant après le montage de la machine automatique (A), et les modules de service (BM) comprenant
o plusieurs éléments d'écran (D) pour entrer et sortir des données, et
o plusieurs unités d'entrée et de sortie (W) pour entrer et/ou sortir des unités de valeur et une unité de sortie de cartes (KA),
- les éléments d'écran (D) étant réalisés sous la forme d'un écran tactile,
**caractérisée en ce que**
- une face avant (V) de l'élément de porte (TE) avec les modules de service (BM) intégrés dans celle-ci est réalisée entièrement sous la forme d'une plaque de verre continue sans saillies dépassant du plan de la face avant, dans laquelle les modules de service (BM) sont intégrés à fleur de la surface, et **en ce que** les modules de service (BM) sont insérés et scellés dans la plaque de verre continue pendant la fabrication de la machine automatique (A).

2. Machine automatique (A) selon la revendication précédente, dans laquelle les modules de service (BM) sont flexibles pendant la fabrication et ne sont pas interchangeables sans outil à l'état monté et sont réalisés de manière intégrée en une unité monolithique continue.

3. Machine automatique (A) selon l'une quelconque des revendications précédentes, la machine automatique (A) comprenant une unité d'éclairage qui présente plusieurs segments d'éclairage (BS), en particulier l'un des segments d'éclairage (BS) étant disposé sur la face avant (V) de l'élément de porte (TE) et s'étendant le long d'un bord extérieur de l'élément de porte (TE).

4. Machine automatique (A) selon l'une quelconque des revendications précédentes, dans laquelle l'élément de porte (TE), et en particulier au moins un élément de cadre métallique de l'élément de porte (TE), présente approximativement la même hauteur de construction que le corps (K) de la machine automatique (A).

5. Machine automatique (A) selon l'une quelconque des revendications précédentes, la machine automatique (A) comprenant un système de fermeture électronique pour ouvrir et fermer le corps (K) qui est actionné par une clé électronique.

6. Machine automatique (A) selon l'une quelconque des revendications précédentes, dans laquelle un système de fermeture électronique de la machine automatique (A) actionne un mécanisme de verrouillage et déverrouillage (M) mécanique dont la position n'est pas visible de l'extérieur.

7. Machine automatique (A) selon l'une quelconque des revendications précédentes, dans laquelle dans le corps (K) de la machine automatique (A) est disposé un élément faisant ressort (FE) qui exerce une force opposée au mouvement de fermeture lors du pivotement de l'élément de porte (TE) d'un état ouvert à un état fermé.

8. Machine automatique (A) selon l'une quelconque des revendications précédentes, dans laquelle le corps (K) de la machine automatique (A) comprend une construction de cadre autoportante (R) qui peut être parée de différents matériaux de parement.

9. Machine automatique (A) selon l'une quelconque des revendications précédentes, dans laquelle l'élément de porte (TE) présente une construction en sandwich et en particulier une couche de verre extérieure, une couche métallique, une couche électronique pour fournir des composants électroniques et une couche de recouvrement intérieure, et/ou dans laquelle le verre de la plaque de verre continue est du verre de sécurité simple vitrage et est traité avec une impression furtive.

10. Elément de porte (TE) permettant d'utiliser une machine automatique (A) selon l'une quelconque des revendications précédentes concernant la machine automatique (A), une pluralité de modules de service intégrés (BM) étant réalisée dans l'élément de porte (TE), l'élément de porte étant réalisé pour être monté sur un corps (K) de manière à pouvoir tourner autour d'un axe vertical, une plaque de verre et les modules de service (BM) intégrés dans celle-ci étant réalisés d'un seul tenant après le montage de la machine automatique (A), et les modules de service (BM) comprenant plusieurs éléments d'écran (D) pour entrer et sortir des données et plusieurs unités d'entrée et de sortie (W) pour entrer et/ou sortir des unités de valeur, et une unité de sortie de cartes (KA), les éléments d'écran (D) étant réalisés sous la forme d'un écran tactile,
**caractérisé en ce qu'**une face avant (V) de l'élément de porte (TE) avec les modules de service (BM) intégrés dans celle-ci est réalisée entièrement sous la forme d'une plaque de verre continue sans saillies dépassant du plan de la face avant, dans laquelle les modules de service (BM) sont intégrés à fleur de surface, et **en ce que** les modules de service (BM) sont insérés et scellés dans la plaque de verre continue pendant la fabrication de la machine automatique (A).

11. Système de machines automatiques comprenant au moins une machine automatique (A) selon l'une quelconque des revendications précédentes concernant la machine automatique (A), et un serveur central (S), la machine automatique (A) respective et le serveur central (S) étant en échange de données par un protocole de réseau (NW), et après détection d'un signal de sortie sur la machine automatique (A), la machine automatique (A) retransmettant un identifiant biunivoque de la carte (UID) au serveur central (S), et l'identifiant (UID) étant exclusivement sur le serveur (S) associé à un signal d'entrée et/ou à des données d'identification d'un utilisateur et stocké.
